# EUROPÄISCHE PATENTANMELDUNG

(11) **EP 2 762 518 A1**
(43) Veröffentlichungstag der Anmeldung: **06.08.2014**
(21) Anmeldenummer: 14153330.7
(22) Anmeldetag: 30.01.2014
(51) Int. Cl.: C08G 77/06

(54) **Hydrolyse von Organochlorsilanen im Rohrbündelreaktor**

(30) Priorität: 05.02.2013 DE 102013201851
(71) Anmelder: Wacker Chemie AG, 81737 München (DE)
(72) Erfinder: Mautner, Konrad, 84489 Burghausen (DE)
(74) Vertreter: Fritz, Helmut

(57) **Zusammenfassung**

Gegenstand der Erfindung ist ein Verfahren zur Hydrolyse von Organochlorsilanen, bei dem in einem Rohrbündelreaktor Organochlorsilane mit Wasser zu einem Polyorganosiloxane enthaltenden Rohhydrolysat und Chlorwasserstoff umgesetzt werden.

## Beschreibung

Die Erfindung betrifft ein Verfahren zur Hydrolyse von Organochlorsilanen in einem Rohrbündelreaktor.

Bei der Hydrolyse von Organochlorsilanen, insbesondere Dimethyldichlorsilan, unter Freisetzung von gasförmigen Chlorwasserstoff muß Wärmeenergie zugeführt werden. Üblicherweise wird die Hydrolyse mit Vorheizern für das Silan, das zugeführte Wasser oder die zugeführte Salzsäure durchgeführt.

DD 217813, US2758124 (Abbildung), US7208617 oder EP876419 beschreiben Kreislaufapparaturen zur Hydrolyse von Organochlorsilanen, ohne näher auf den Wärmeeintrag einzugehen. US6225490 beschreibt in den Beispielen als Hydrolysereaktor einen Behälter mit Rühreinbauten, Auf den Energieeintrag wird nicht eingegangen.

US7479567 beschreibt ein Verfahren zur Hydrolyse in einer Reaktivkolonne, bei der der Energieeintrag über den Umlaufverdampfer erfolgt, der gesättigte Salzsäure erhitzt oder verdampft.

Gegenstand der Erfindung ist ein Verfahren zur Hydrolyse von Organochlorsilanen, bei dem in einem Rohrbündelreaktor Organochlorsilane mit Wasser zu einem Polyorganosiloxane enthaltenden Rohhydrolysat und Chlorwasserstoff umgesetzt werden.

Im Gegensatz zu den bekannten Verfahren zur Hydrolyse von Organochlorsilanen findet die Hydrolyse nicht in einer Kreislaufapparatur oder einer Kolonne mit separatem Apparat zum Wärmeeintrag statt.

Das Verfahren ist kostengünstiger und effektiver in der Wärmeübertragung, sowie wesentlich leichter zu steuern. Der Rohrbündelreaktor gewährleistet gleichzeitig die Hydrolyse und den passenden Energieeintrag. Insbesondere die Temperatursteuerung kann homogener durchgeführt werden.

Im Rohrbündelreaktor findet das Verfahren zur Hydrolyse von Organochlorsilanen in mehreren parallel geschalteten Rohren statt. Die Länge und die Anzahl der Rohre hängen von der zu übertragenden Energiemenge ab und diese wiederum hängt von der Menge der zu hydrolysierenden Organochlorsilane und der freiwerdenden Menge gasförmigen Chlorwasserstoffs ab. Vorzugsweise enthält ein Rohrbündelreaktor 5 bis 100, insbesondere 10 bis 50 Rohre.

Die Rohre können beliebige geometrische Formen aufweisen. Vorzugsweise weisen die Rohre einen nahezu kreisförmigen Durchmesser auf. Sie sind vorzugsweise gerade und parallel zueinander angeordnet.

Der Rohrinnendurchmesser beträgt vorzugsweise 10 mm bis 150 mm, insbesondere 15 mm bis 45 mm.

Die Länge der Rohre beträgt vorzugsweise 0,5 m bis 10 m, insbesondere 1 m bis 5 m.

Vorzugsweise ist der Rohrbündelreaktor stehend aufgebaut.

Die Wärmeübertragung im Rohrbündelreaktor erfolgt durch ein Wärmeträgermedium, das im Gleich- oder Gegenstrom um die Rohre geleitet wird.

Als Wärmeträgermedium sind alle üblichen Wärmeträgerflüssigkeiten, insbesondere Öle und bevorzugt Dampf von vorzugsweise 0,5 bar bis 20 bar geeignet.

Der Werkstoff der Rohre ist vorzugsweise beständig gegenüber konzentrierter Salzsäure, Beispiele hierfür sind Tantal, Zirkonium, Siliciumcarbid und bevorzugt Graphit.

Die Reaktionstemperatur beträgt vorzugsweise 20 °C bis 150 °C, insbesondere 45 °C bis 85 °C. Der Reaktionsdruck beträgt vorzugsweise 0,5 bar bis 10 bar, bevorzugt 2 bar bis 6 bar.

Eingesetzt werden vorzugsweise die Organochlorsilane der allgemeinen Formel I

RₐSiCl₄₋ₐ (I),

in der
- **R**: Wasserstoff, Alkylgruppe mit 1-12 C-Atomen oder Arylgruppen mit 6-12 C-Atomen und
- **a**: Werte 2 oder 3 bedeuten.

Bevorzugte Bedeutungen von R sind Wasserstoff, Methyl und Phenyl. Bevorzugt eingesetzt werden Organochlorsilane, die ausgewählt werden aus Dimethyldichlorsilan, Methyldichlorsilan, Trimethylchlorsilan, Methyltrichlorsilan und Dimethylchlorsilan oder Gemischen davon. Insbesondere wird Dimethyldichlorsilan eingesetzt.

Weiterhin können beim Hydrolyseverfahren Lösungsmittel eingesetzt werden. Vorzugsweise werden auf 100 Gewichtsteile Organochlorsilane höchstens 50 Gewichtsteile, insbesondere höchstens 20 Gewichtsteile Lösungsmittel eingesetzt. Die Lösungsmittel werden vorzugsweise ausgewählt aus aliphatischen und aromatischen Kohlenwasserstoffen mit 5 bis 20 C-Atomen und Gemischen niederviskoser Siloxane. Beispiele for Siloxane sind Cyclodimethylpolysiloxane, Cyclopolymethylsiloxane, Trimethylsily-endgestopperte Oligodimethylsiloxane, Hydroxyendgestopperte Oligodimethylsiloxane. Bevorzugt wird ohne Lösungsmittel gearbeitet.

Wasser wird, wenn es säurefrei oder als verdünnte Salzsäure eingesetzt wird bis zur stöchiometrischen Menge des zu hydrolysierenden Chlors in den Organochlorsilanen eingesetzt. Vorzugsweise wird dabei höchstens 95 Mol-% der stöchiometrischen Menge an Wasser eingesetzt, die für das zu hydrolysierende Chlor erforderlich ist. Wenn Wasser in Form von gesättigter Salzsäure eingesetzt wird kann auch ein Überschuss an Wasser eingesetzt werden.

Bevorzugt wird Wasser bei dem bei der Einspeisung vorherrschenden Druck und Temperatur als gesättigte Salzsäure eingesetzt.

Die Organochlorsilane, das Wasser, das auch als Salzsäure vorliegen kann und gegebenenfalls Lösungsmittel werden vor dem Reaktor bei vorzugsweise 10 °C bis 80 °C gemischt und in den Reaktor eingespeist. Vorzugsweise erfolgt das Mischen unmittelbar vor dem Reaktor. Die Abfolge der Einspeisestellen ist für das erfindungsgemäße Verfahren unerheblich.

Die Verweilzeit der Mischung im Reaktor beträgt vorzugsweise 0,5 sec bis 15 min, insbesondere 0,5 sec bis 4 min.

Der bei der Umsetzung entstehende Chlorwasserstoff fällt beim Einsatz gesättigter Salzsäure gasförmig an. Beim Einsatz von Wasser und verdünnter Salzsäure löst sich der Chlorwasserstoff in der Salzsäure bis deren Sättigungsgrenze überschritten ist. Das Verfahren kann beim Einsatz einer unterstöchiometrischen Menge an Wasser in Bezug auf das zu hydrolysierende Chlor so durchgeführt werden, dass nur gasförmiger Chlorwasserstoff und keine Salzsäure aus dem Reaktor abgeführt wird.

Das Rohhydrolysat enthält vorzugsweise Bestandteile, die ausgewählt werden aus Polyorganosiloxanen und unumgesetzen Organochlorsilanen. Die Polyorganosiloxane im Rohhydrolysat werden vorzugsweise ausgewählt aus cyclischen und linearen, Chlor enthaltenden oder chlorfreien Oligo- und Polyorganosiloxanen.

Vorzugsweise werden die Oligo- und Polyorganosiloxane im Rohhydrolysat ausgewählt aus kurzkettigen Siloxanen, die beidseitig hydroxyendständig oder chlorendständig sind oder jeweils an einem Ende hydroxyendständig und am anderen Ende chlorendständig sind und cyclischen Siloxanen. Das Rohhydrolysat enthält abhängig von Druck und Temperatur auch gelösten Chlorwasserstoff,

Das Reaktionsgemisch aus Rohhydrolysat, Chlorwasserstoff und gegebenenfalls Salzsäure wird nach Verlassen des Reaktors vorzugsweise in einer Phasentrenneinrichung in Gasphase und Flüssigphase aufgetrennt und anschließend auf an sich bekannte Weise weiterbehandelt.

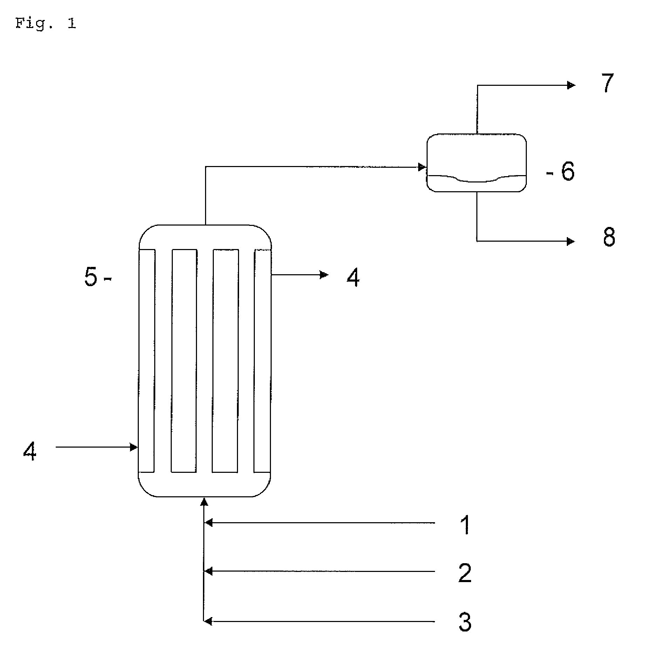

In Fig. 1 wird das Verfahren zur Hydrolyse von Organochlorsilanen beispielhaft erläutert.

Durch Leitung 1 wird Organochlorsilan, durch Leitung 2 wird Lösungsmittel und durch Leitung 3 wird Wasser oder Salzsäure zugeführt, vor Eintritt in den Rohrbündelreaktor 5 vermischt und erwärmt. Im Rohrbündelreaktor 5 findet die Hydrolyse der Organochlorsilane mit Wasser zu einem Polyorganosiloxane enthaltenden Rohhydrolysat und Chlorwasserstoff statt. Dem Rohrbündelreaktor 5 wird durch einen Wärmeträger 4 Wärme zugeführt. Das Reaktionsgemisch aus Rohhydrolysat, Chlorwasserstoff und gegebenenfalls Salzsäure verlässt den Rohrbündelreaktor 5 und wird in einer Phasentrenneinrichung 6 in gasförmigen Chlorwasserstoff 7 und ein flüssiges Gemisch aus Hydrolysat und gegebenenfalls Salzsäure 8 aufgetrennt.

Alle vorstehenden Symbole der vorstehenden Formeln weisen ihre Bedeutungen jeweils unabhängig voneinander auf. Soweit nicht anders erwähnt sind alle Mengen - und Prozentangaben auf das Gewicht bezogen, alle Drücke 0,10 MPa (abs.) und alle Temperaturen 20°C.

## Patentansprüche

1. Verfahren zur Hydrolyse von Organochlorsilanen, bei dem in einem Rohrbündelreaktor Organochlorsilane mit Wasser zu einem Polyorganosiloxane enthaltenden Rohhydrolysat und Chlorwasserstoff umgesetzt werden.

2. Verfahren nach Anspruch 1, bei dem die Wärmeübertragung im Rohrbündelreaktor durch ein Wärmeträgermedium, das um die Rohre geleitet wird, erfolgt.

3. Verfahren nach einem der vorangehenden Ansprüche, bei dem die Reaktionstemperatur 20 °C bis 150 °C bei 0,5 bar bis 10 bar beträgt.

4. Verfahren nach einem der vorangehenden Ansprüche, bei dem die Organochlorsilane der allgemeinen Formel I
RₐSiCl₄₋ₐ (I),
eingesetzt werden, wobei
R Wasserstoff, Alkylgruppe mit 1-12 C-Atomen oder Arylgruppen mit 6-12 C-Atomen und
a Werte 1, 2 oder 3 bedeuten.

5. Verfahren nach einem der vorangehenden Ansprüche, bei dem das Wasser in Form von gesättigter Salzsäure eingesetzt wird.

6. Verfahren nach einem der vorangehenden Ansprüche, bei dem die Verweilzeit im Reaktor 0,5 sec bis 15 min beträgt.
